(19) Europäisches Patentamt
European Patent Office
Office européen des brevets

(11) **EP 4 465 714 A1**

(12) **EUROPEAN PATENT APPLICATION**
published in accordance with Art. 153(4) EPC

(43) Date of publication:
**20.11.2024 Bulletin 2024/47**

(21) Application number: **23739965.4**

(22) Date of filing: **09.01.2023**

(51) International Patent Classification (IPC):
*H04W 68/00* (2009.01)

(52) Cooperative Patent Classification (CPC):
**H04W 68/00; H04W 72/0453; H04W 72/23;**
Y02D 30/70

(86) International application number:
**PCT/CN2023/071301**

(87) International publication number:
**WO 2023/134623 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.01.2022 CN 202210028318**

(71) Applicant: **VIVO MOBILE COMMUNICATION CO., LTD.**
Dongguan, Guangdong 523863 (CN)

(72) Inventors:
• LI, Dongru
  Dongguan, Guangdong 523863 (CN)
• SHEN, Xiaodong
  Dongguan, Guangdong 523863 (CN)

(74) Representative: **Lavoix**
**Bayerstraße 83**
**80335 München (DE)**

(54) **INFORMATION ACQUISITION METHOD AND APPARATUS, INFORMATION CONFIGURATION METHOD AND APPARATUS, AND COMMUNICATION DEVICE**

(57) This application discloses an information obtaining method and apparatus, an information configuration method and apparatus, and a communication device. The method in embodiments of this application includes: obtaining, by a terminal, a first offset, where the first offset indicates an offset between a radio frame associated with a paging early indication occasion PEI-O and the 1st PEI-MO of the PEI-O; and monitoring the PEI-O based on the first offset, where a value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

FIG. 3

EP 4 465 714 A1

**Description**

**CROSS-REFERENCE TO RELATED APPLICATIONS**

This application claims priority to Chinese Patent Application No. 202210028318.5, filed in China on January 11, 2022, which is incorporated herein by reference in its entirety.

**TECHNICAL FIELD**

This application pertains to the field of communication technologies, and specifically relates to an information obtaining method and apparatus, an information configuration method and apparatus, and a communication device.

**BACKGROUND**

In a related technology, offset parameters related to a paging early indication (Paging Early Indication, PEI) occasion (PEI-O) include a frame-level offset (Frame-level offset) parameter and a symbol-level offset (Symbol-level offset) parameter. However, value ranges of the foregoing offset parameters are not specified in the related technology. As a result, location information about the PEI-O cannot be accurately determined based on the foregoing offset parameters, and detection performance of a terminal on the PEI-O is further affected.

**SUMMARY**

Embodiments of this application provide an information obtaining method and apparatus, an information configuration method and apparatus, and a communication device, to resolve a problem of how to improve detection performance of a terminal on a PEI-O.

According to a first aspect, an information obtaining method is provided, including:

A terminal obtains a first offset, where the first offset indicates an offset between a radio frame associated with a paging early indication occasion PEI-O and the 1st paging early indication monitoring occasion PEI-MO of the PEI-O; and the terminal monitors the PEI-O based on the first offset, where a value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

According to a second aspect, an information configuration method is provided, including:

A network side device configures a first offset, where the first offset indicates an offset between a radio frame associated with a paging early indication occasion PEI-O and the 1st paging early indication monitoring occasion PEI-MO of the PEI-O, where a value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

According to a third aspect, an information obtaining apparatus is provided, including:

a first obtaining module, configured to obtain a first offset, where the first offset indicates an offset between a radio frame associated with a paging early indication occasion PEI-O and the 1st paging early indication monitoring occasion PEI-MO of the PEI-O; and

a monitoring module, configured to monitor the PEI-O based on the first offset, where a value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

According to a fourth aspect, an information configuration apparatus is provided, including:

a configuration module, used to configure a first offset, where the first offset indicates an offset between a radio frame associated with a paging early indication occasion PEI-O and the 1st paging early indication monitoring occasion PEI-MO of the PEI-O, where
a value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

According to a fifth aspect, a terminal is provided. The terminal includes a processor and a memory, and the memory stores a program or an instruction that can be run on the processor. When the program or the instruction is executed by the processor, the steps of the method according to the first aspect are implemented.

According to a sixth aspect, a terminal is provided, including a processor and a communication interface, where the communication interface is configured to obtain a first offset, where the first offset indicates an offset between a radio frame associated with a paging early indication occasion PEI-O and the 1st paging early indication monitoring occasion PEI-MO of the PEI-O; and the processor is configured to monitor the PEI-O based on the first offset, where

a value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

According to a seventh aspect, a network side device is provided. The network side device includes a processor and a memory, and the memory stores a program or an instruction that can be run on the processor. When the program or the instruction is executed by the processor, the steps of the method according to the second aspect are implemented.

According to an eighth aspect, a network side device is provided, including a processor and a communication interface, where the processor is used to configure a first offset, where the first offset indicates an offset between a radio frame associated with a paging early indication occasion PEI-O and the 1st paging early indication monitoring occasion PEI-MO of the PEI-O, where

a value range of the first offset is related to at least one of the following items:

a subcarrier spacing SCS;
a length of the radio frame;
a first density, where the first density is a density of a PEI-O or a paging early indication frame PEI-frame in a first time span; and

a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

According to a ninth aspect, an information processing system is provided, including a terminal and a network side device. The terminal may be configured to perform the steps of the information obtaining method according to the first aspect, and the network side device may be configured to perform the steps of the information configuration method according to the second aspect.

According to a tenth aspect, a readable storage medium is provided. The readable storage medium stores a program or an instruction. When the program or the instruction is executed by a processor, the steps of the method according to the first aspect or the steps of the method according to the second aspect are implemented.

According to an eleventh aspect, a chip is provided. The chip includes a processor and a communication interface, the communication interface is coupled to the processor, and the processor is configured to run a program or an instruction, to implement the method according to the first aspect or the method according to the second aspect.

According to a twelfth aspect, a computer program/program product is provided. The computer program/program product is stored in a storage medium, and the computer program/program product is executed by at least one processor to implement the steps of the method according to the first aspect or the steps of the method according to the second aspect.

In the embodiments of this application, a terminal obtains a first offset. The first offset indicates an offset between a radio frame associated with a paging early indication occasion PEI-O and the 1st PEI-MO of the PEI-O. A value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between the radio frame associated with the PEI-O and a target paging frame PF, and the target paging frame is an earliest or latest PF in at least one PF in which a paging occasion PO associated with the PEI-O is located. The first density, the second offset, and the SCS are configurable parameters and value ranges are flexible. Therefore, the value range of the first offset is determined based on the first density, the second offset, and/or the SCS, so that a value of the first offset is more adaptive and flexible, and detection performance of the terminal on the PEI-O can be improved.

## BRIEF DESCRIPTION OF DRAWINGS

FIG. 1 is a structural diagram of a communication system to which embodiments of this application may be applied;
FIG. 2 is a schematic diagram of a start location of a PEI-frame and a location of the 1st PDCCH MO of a PEI-O;
FIG. 3 is a schematic flowchart of an information obtaining method according to an embodiment of this application;
FIG. 4 is a schematic flowchart of an information configuration method according to an embodiment of this application;
FIG. 5 is a schematic module diagram of an information obtaining apparatus according to an embodiment of this application;
FIG. 6 is a structural block diagram of a communication device according to an embodiment of this application;
FIG. 7 is a structural block diagram of a terminal according to an embodiment of this application;
FIG. 8 is a schematic module diagram of an information configuration apparatus according to an embodiment of this application; and
FIG. 9 is a structural block diagram of a network side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and the NR term is used in most of the following description, although these technologies can also be applied to applications other than an NR system application, for example, a 6th generation (6th Generation, 6G) communication system.

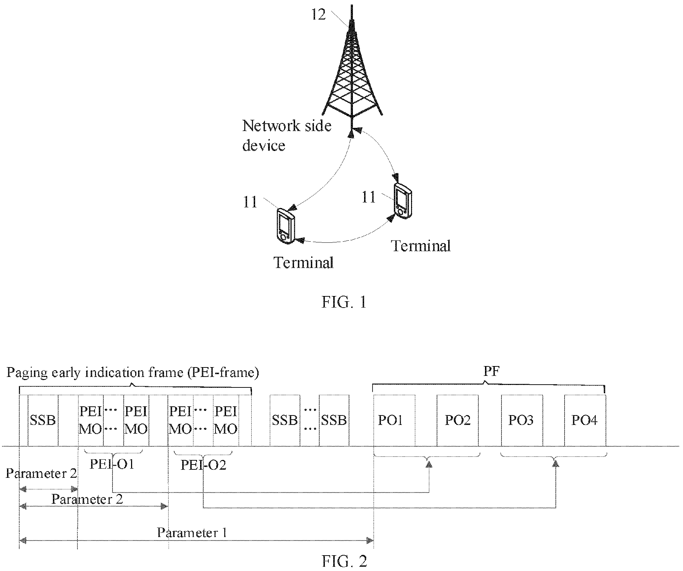

FIG. 1 is a block diagram of a wireless communication system to which embodiments of this application may be applied. The wireless communication system includes terminals 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with a wireless communication function, such as a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bracelet, a smart chain bracelet, a smart ring, a smart necklace, a smart anklet, a smart chain anklet, or the like), a smart wrist strap, smart clothing, and the like. It should be noted that a specific type of the terminal 11 is not limited in the embodiments of this application. The network side device 12 may include an access network device or a core network device. The access network device may also be referred to as a radio access network device, a radio access network (Radio Access Network, RAN), a radio access network function, or a radio access network unit. The access network device 12 may include a base station, a wireless local area network (Wireless Local Area Network, WLAN) access node, a WiFi node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

To enable a person skilled in the art to better understand the embodiments of this application, the following descriptions are provided first.

1. Paging early indication

User equipment (User Equipment, UE) in an idle (idle) state needs to perform radio resource management (Radio Resource management, RRM) measurement and receive a paging (paging) physical downlink control channel (Physical downlink control channel, PDCCH). The paging PDCCH is a PDCCH on which cyclic redundancy check (Cyclic Redundancy Check, CRC) scrambling is performed by using a paging radio network temporary identity (Paging RNTI, P-RNTI). There is a low probability that paged UE exists in a paging occasion (paging occasion, PO). Therefore, if the UE detects a paging PDCCH in each paging cycle, unnecessary power consumption occurs.

To reduce power consumption of a terminal, the UE receives a PEI before receiving the paging PDCCH. The PEI is a piece of downlink control information (Downlink Control Information, DCI). The UE determines, based on content indicated in the paging early indication PEI DCI, whether a subsequent paging PDCCH needs to be monitored. In this way, the UE may determine in advance, based on the PEI, whether the paging PDCCH needs to be received. If the PEI indicates the UE not to receive the paging PDCCH, the UE does not need to subsequently detect one or more synchronization signal blocks (Synchronization Signal Blocks, SSBs), thereby reducing power consumption.

2. Design of a PEI-O

For design of a specific location of a paging early indication occasion (PEI occasion, PEI-O), a related location of the PEI-O is determined based on the following two offsets (offsets).

(1) Parameter 1: Frame-level offset (PEI-F_offset). As shown in FIG. 2, it is a frame-level offset between a start location of a PEI-frame and a start location of the 1st paging frame (Paging Frame, PF) indicated by the PEI-frame.

(2) Parameter 2: Symbol-level offset (first PDCCH-Monitoring Occasion Of PEI-O). As shown in FIG. 2, it is a symbol-level offset between the 1st PDCCH monitoring occasion (Monitoring Occasion, MO) of a PEI-O and a start location of a paging early indication frame (PEI-frame) associated with the PEI-O.

One PEI-O may include one or more PEI PDCCH MOs (PEI-MO for short).

The following describes in detail the information obtaining method provided in the embodiments of this application through some embodiments and application scenarios thereof with reference to the accompanying drawings.

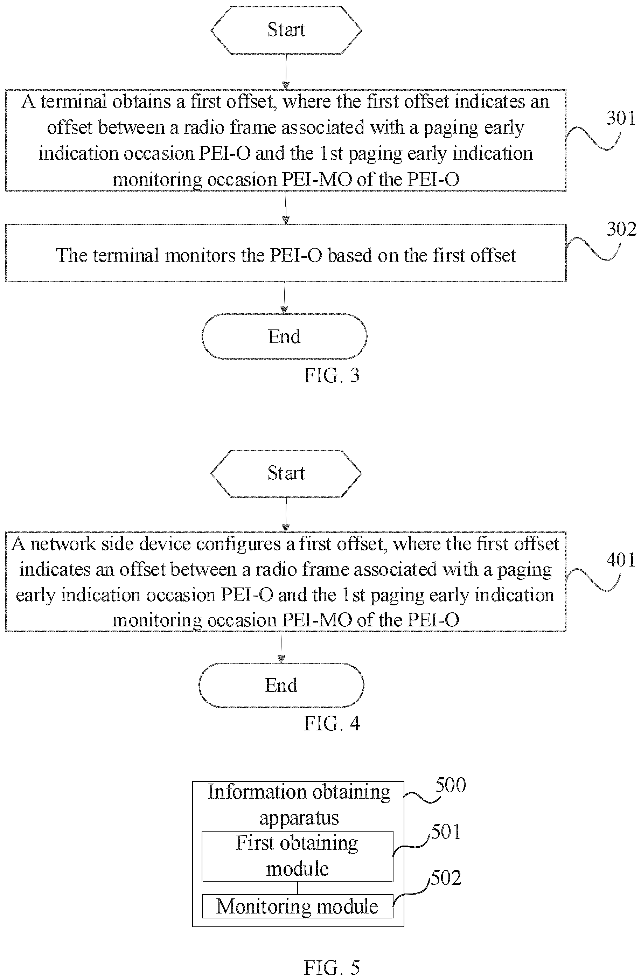

As shown in FIG. 3, an embodiment of this application provides an information obtaining method, including the following steps.

Step 301: A terminal obtains a first offset, where the first offset indicates an offset between a radio frame associated with a paging early indication occasion PEI-O and the 1st paging early indication monitoring occasion (Paging Early Indication Monitoring Occasion, PEI-MO) of the PEI-O.

Optionally, the first offset indicates an offset between a start moment of a radio frame associated with a PEI-O and a start moment of the 1st paging early indication monitoring occasion PEI-MO of the PEI-O.

A value range of the first offset (first PDCCH-Monitoring Occasion Of PEI-O) is related to at least one of the following items:

a subcarrier spacing (Subcarrier Spacing, SCS);

a length of the radio frame;

a first density, where the first density is a density of a PEI-O or a paging early indication frame PEI-frame in a first time span; and

a value of a second offset, where the second offset indicates an offset between the radio frame associated with the PEI-O and a target paging frame (Paging frame, PF), and the target paging frame is an earliest or latest PF in at least one PF in which a paging occasion PO associated with the PEI-O is located. Optionally, the second offset indicates an offset between a start moment of the radio frame associated with the PEI-O and a start moment of a target paging frame PF.

The first time span may be a paging cycle (for example, a default paging cycle configured by a network side device), or may be another preset time length.

Step 302: The terminal monitors the PEI-O based on the first offset.

In this embodiment of this application, a first offset is obtained. The first offset indicates an offset between a radio frame associated with a paging early indication occasion PEI-O and the 1st PEI-MO of the PEI-O. A value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between the radio frame associated with the PEI-O and a target paging frame PF, and the target paging frame is an earliest or latest PF in at least one PF in which a paging occasion (Paging Occasion, PO) associated with the PEI-O is located. The first density, the second offset, and the SCS are configurable parameters and value ranges are flexible. Therefore, the value range of the first offset is determined based on the first density, the second offset, and/or the SCS, so that a value of the first offset is more adaptive and flexible, and detection performance of the terminal on the PEI-O can be improved.

In a first optional implementation, in a case that the value range of the first offset is related to the first density and the SCS, the first offset meets the following condition:

offset ≤ a quantity of first symbols; or

0 ≤ offset ≤ a quantity of first symbols, where

offset represents a value of the first offset, and the quantity of first symbols is obtained through calculation based on the first density and the SCS.

Optionally, a specific calculation process of obtaining the quantity of first symbols includes:

obtaining an interval between two adjacent PEI-frames based on the first density; and

obtaining the quantity of first symbols based on the interval between the two adjacent PEI-frames and the SCS.

Optionally, the first density is related to at least one of the following items:

a second density;

a quantity of POs associated with the PEI-O; and
a quantity of PFs occupied by the POs associated with the PEI-O, where
the second density is a density of a PF in a second time span.

It may be understood that the first density may be specifically configured by the network side device, or may be obtained by the terminal based on information about the foregoing related items.

Optionally, the first time span may be equal to the second time span. Further, the first time span and the second time span have the same length which is equal to the length of paging cycle.

Optionally, in a case that the first density is related to the second density and the quantity of PFs occupied by the POs associated with the PEI-O, the first density meets the following condition:

the first density = the second density ÷ the quantity of PFs occupied by the POs associated with the PEI-O.

Optionally, the first density is equal to the second density. For example, in a case that the network side device does not configure the first density, the network side device and the terminal may understand that the first density is equal to the second density by default.

In other words, the network side device may not explicitly configure the first density, and the first density may be implicitly obtained based on the second density.

In an embodiment, if the network side device configures the second density and the quantity of PFs occupied by the POs associated with the PEI-O, the network side device and the terminal may obtain the first density in an implicit way, where the first density = the second density ÷ the quantity of PFs occupied by the POs associated with the PEI-O. For example, if the second density is 1/2, and the quantity of PFs occupied by POs associated with PEI-O is 2, the first density is 1/4. In other words, the density of the PEI-frame in the first time span is 1/4, that is, there is one PEI-frame in every four radio frames.

In this embodiment of this application, a value of the first density may be 1, 1/2, 1/4, 1/8, 1/16, 1/32, or the like, and the terminal may determine a quantity of PEI-Os or PEI-frames in the first time span based on the first density.

In this implementation, the value range of the first offset may be $\left(0, \frac{10*2^{\mu}*14}{x} - 1\right)$, where x represents the first density, and $\mu$ represents a value of the SCS. A value unit of the first offset is a symbol (symbol). It may be understood that $\frac{10*2^{\mu}*14}{x} - 1$ in the value range means the quantity of first symbols.

For example, if the SCS is 15 kHz, and the first density is 1/2, the value range of the first offset is (0, (10* 1* 14*2-1) =279). A unit of the first offset is a symbol (symbol).

In this implementation, a calculation process of obtaining the quantity of first symbols based on the first density and the SCS is as follows:

taking a reciprocal of the first density to obtain an interval between two adjacent PEI-frames (where the interval is referred to as a PEI-frame interval for short); and for example, if the first density is 1/2, a quantity of radio frames occupied by the PEI-frame interval is 2, that is, the PEI-frame interval is equal to 20 ms; and
the quantity of first symbols is equal to a quantity of symbols occupied by the PEI-frame interval minus 1, where the quantity of first symbols varies based on a value of the SCS.

It may be understood that, the first density * a quantity of radio frames occupied by the first time span = a total quantity of PEI-frames or PEI-Os in the first time span.

In this implementation, the value range of the first offset may be (0, the quantity of symbols occupied by the PEI-frame interval - 1), the network side device may flexibly configure a value of the PEI-frame interval, and the value of the PEI-frame interval is greater than or equal to a length of one radio frame. Therefore, the value range of the first offset is large, and the network side device may more flexibly configure the first offset to adapt to different application scenarios. In addition, because the value range of the first offset is limited within the PEI-frame interval, a case of overlapping between PEI-Os included in different PEI-frames can be avoided. Therefore, this implementation ensures both detection performance of the PEI-O and flexibility of network configuration.

In a second optional implementation, in a case that the value range of the first offset is related to the value of the second offset and the SCS, the first offset meets the following condition:

offset ≤ a quantity of second symbols; or
0 ≤ offset ≤ a quantity of second symbols, where

offset represents a value of the first offset, and the quantity of second symbols is obtained through calculation based on the value of the second offset and the SCS.

In this implementation, the value range of the first offset may be specifically $(0, f * 10 * 2^{\mu} * 14 - 1)$, where f represents the value of the second offset, a unit of f is a frame, and $\mu$ represents a value of the SCS. It may be understood that $f * 10 * 2^{\mu} * 14 - 1$ herein is the quantity of second symbols, namely, a quantity of symbols occupied by the second offset minus 1.

For example, if the second offset includes four radio frames, and the SCS is 15 kHz, the value range of the first offset is $(0, (4 * 10 * 1 * 14-1)=559)$ in the foregoing implementation.

In this implementation, the value of the second offset may be configurable, and the value range is large. Therefore, the first offset may be flexibly configured by using this method. However, in this implementation, in some scenarios, a case of overlapping between PEI-Os included in different PEI-frames cannot be avoided.

In a third optional implementation, in a case that the value range of the first offset is related to a length of one radio frame and the SCS, the first offset meets the following condition:

offset $\leq$ a quantity of third symbols; or
$0 \leq$ offset $\leq$ a quantity of third symbols, where
offset represents a value of the first offset, and the quantity of third symbols is obtained through calculation based on the length of the radio frame and the SCS.

For different SCS levels, a quantity of symbols occupied by one radio frame is different.

A type of the radio frame may be a radio frame of a specific type, for example, a PEI-frame.

In this implementation, the value range of the first offset may be specifically $(0, 10 * 2^{\mu} * 14 - 1)$, where $\mu$ represents a value of the SCS, and $10 * 2^{\mu} * 14 - 1$ is the quantity of third symbols. A unit of the first offset is a symbol (symbol). For example, if the SCS is 15 kHz, the value range of the first offset is $(0, 139)$ in this implementation.

In a specific embodiment of this application, the terminal obtains the first offset, determines location information about the PEI-O based on this, and then monitors the PEI-O. If the terminal detects first downlink control information (Downlink Control Information, DCI) (first DCI, which is DCI for carrying PEI information) on the PEI-O, the terminal determines, based on indication information indicating whether a PO needs to be monitored in the first DCI, whether to monitor the PO associated with the terminal.

If the terminal is indicated by the first DCI to monitor the PO associated with the terminal, the terminal monitors the PO associated with the terminal. Location information about the PO is determined based on a second parameter, a value range of the second parameter is related to the second density and the SCS, and the second density means a density of a paging frame in a second time span (for example, a paging cycle (paging cycle)). In other words, in this embodiment, the terminal monitors the PEI-O and/or the PO based on the first density and the second density.

According to the foregoing different implementations, the method in this embodiment of this application increases flexibility of network configuration of the first offset, and improves detection performance of the terminal on the PEI-O by avoiding a collision between the PEI-O and another channel signal or a collision among a plurality of PEI-Os associated with different PEI-frames.

As shown in FIG. 4, an embodiment of this application further provides an information configuration method, including the following step.

Step 401: A network side device configures a first offset, where the first offset indicates an offset between a radio frame associated with a paging early indication occasion PEI-O and the 1st paging early indication monitoring occasion PEI-MO of the PEI-O.

Optionally, the first offset indicates an offset between a start moment of a radio frame associated with a PEI-O and a start moment of the 1st PEI-MO of the PEI-O.

A value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

The first time span may be a paging cycle (for example, a default paging cycle configured by the network side device), or may be another preset time length.

In this embodiment of this application, the network side device configures the first offset, and sends the first offset to a terminal. A value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between a start moment of the radio frame associated with the PEI-O and a start moment of a target paging frame PF, and the target paging frame is an earliest or latest PF in at least one PF in which a paging occasion PO associated with the PEI-O is located. The first density, the second offset, and the SCS are configurable parameters and value ranges are flexible. Therefore, the value range of the first offset is determined based on the first density, the second offset, and/or the SCS, so that a value of the first offset is more adaptive and flexible, and detection performance of the terminal on the PEI-O can be improved.

In a first optional implementation, in a case that the value range of the first offset is related to the first density and the SCS, the first offset meets the following condition:

offset ≤ a quantity of first symbols; or
0 ≤ offset ≤ a quantity of first symbols, where
offset represents a value of the first offset, and the quantity of first symbols is obtained through calculation based on the first density and the SCS.

Optionally, the method in this embodiment of this application further includes:

obtaining an interval between two adjacent PEI-frames based on the first density; and
obtaining the quantity of first symbols based on the interval between the two adjacent PEI-frames and the SCS.

Optionally, the first density is related to at least one of the following items:

a second density;
a quantity of POs associated with the PEI-O; and
a quantity of PFs occupied by the POs associated with the PEI-O, where
the second density is a density of a PF in a second time span.

Optionally, the first time span may be equal to the second time span. Further, the first time span and the second time span have a same paging cycle length.
Optionally, in a case that the first density is related to the second density and the quantity of PFs occupied by the POs associated with the PEI-O, the first density meets the following condition:

the first density = the second density ÷ the quantity of PFs occupied by the POs associated with the PEI-O.

Optionally, the first density is equal to the second density. For example, in a case that the network side device does not configure the first density, the network side device and the terminal may understand that the first density is equal to the second density by default.
In other words, the network side device may not explicitly configure the first density, and the first density may be implicitly obtained based on the second density.
In an embodiment, if the network side device configures the second density and the quantity of PFs occupied by the POs associated with the PEI-O, the network side device and the terminal may obtain the first density in an implicit way, where the first density = the second density ÷ the quantity of PFs occupied by the POs associated with the PEI-O. For example, if the second density is 1/2, and the quantity of PFs occupied by POs associated with PEI-O is 2, the first density is 1/4. In other words, the density of the PEI-frame in the first time span is 1/4, that is, there is one PEI-frame in every four radio frames.

In this embodiment of this application, a value of the first density $\left(0, \dfrac{10*2^{\mu}*14}{x} - 1\right)$ may be 1, 1/2, 1/4, 1/8, 1/16, 1/32, or the like, and the terminal may determine a quantity of PEI-Os or PEI-frames in the first time span based on the first density.
In this implementation, the value range of the first offset may be , where x represents the first density, and $\mu$ represents a value of the SCS. A value unit of the first offset is a symbol (symbol). It may be understood that $\dfrac{10*2^{\mu}*14}{x} - 1$ in the value range means the quantity of first symbols.
For example, if the SCS is 15 kHz, and the first density is 1/2, the value range of the first offset is (0, (10* 1* 14*2-1)=279). A unit of the first offset is a symbol (symbol).

In this implementation, a calculation process of obtaining the quantity of first symbols based on the first density and the SCS is as follows:

taking a reciprocal of the first density to obtain an interval between two adjacent PEI-frames (where the interval is referred to as a PEI-frame interval for short); and for example, if the first density is 1/2, a quantity of radio frames occupied by the PEI-frame interval is 2, that is, the PEI-frame interval is equal to 20 ms; and

the quantity of first symbols is equal to a quantity of symbols occupied by the PEI-frame interval minus 1, where the quantity of first symbols varies based on a value of the SCS.

It may be understood that, the first density * a quantity of radio frames occupied by the first time span = a total quantity of PEI-frames or PEI-Os in the first time span.

In this implementation, the value range of the first offset may be (0, the quantity of symbols occupied by the PEI-frame interval - 1), the network side device may flexibly configure a value of the PEI-frame interval, and the value of the PEI-frame interval is greater than or equal to a length of one radio frame. Therefore, the value range of the first offset is large, and the network side device may more flexibly configure the first offset to adapt to different application scenarios. In addition, because the value range of the first offset is limited within the PEI-frame interval, a case of overlapping between PEI-Os included in different PEI-frames can be avoided. Therefore, this implementation ensures both detection performance of the PEI-O and flexibility of network configuration.

In a second optional implementation, in a case that the value range of the first offset is related to the value of the second offset and the SCS, the first offset meets the following condition:

offset $\leq$ a quantity of second symbols; or

$0 \leq$ offset $\leq$ a quantity of second symbols, where

offset represents a value of the first offset, and the quantity of second symbols is obtained through calculation based on the value of the second offset and the SCS.

In this implementation, the value range of the first offset may be specifically (0, $f * 10 * 2^{\mu} * 14 - 1$), where f represents the value of the second offset, a unit of f is a frame, and $\mu$ represents a value of the SCS. $f * 10 * 2^{\mu} * 14 - 1$ is the quantity of second symbols, namely, a quantity of symbols occupied by the second offset minus 1. A unit of the first offset is a symbol (symbol).

In a third optional implementation, in a case that the value range of the first offset is related to a length of one radio frame and the SCS, the first offset meets the following condition:

offset $\leq$ a quantity of third symbols; or

$0 \leq$ offset $\leq$ a quantity of third symbols, where

offset represents a value of the first offset, and the quantity of third symbols is obtained through calculation based on the length of the radio frame and the SCS.

For different SCS levels, a quantity of symbols occupied by one radio frame is different.

A type of the radio frame may be a radio frame of a specific type, for example, a PEI-frame.

In this implementation, the value range of the first offset may be specifically (0, $10 * 2^{\mu} * 14 - 1$), where $\mu$ represents a value of the SCS, and $10 * 2^{\mu} * 14 - 1$ is the quantity of third symbols. A unit of the first offset is a symbol (symbol).

Optionally, in this embodiment of this application, that the network side device configures the first offset includes: The network side device configures a first offset list, where the first offset list includes at least one first offset, and a quantity of first offsets included in the first offset list is determined based on a maximum quantity of PEI-Os included in a paging cycle or a PEI-frame. Optionally, a quantity of first offsets included in the first offset list may be determined based on a maximum quantity of PEI-Os included in a paging cycle or a PEI-frame. A minimum quantity may be specifically 1.

Optionally, each first offset in the first offset list corresponds to one PEI-O.

In a specific embodiment of this application, in a case that the first optional implementation is applied, radio resource control (Radio Resource Control, RRC) parameters configured by the network side device include the following:

a first density, namely, a density of a PEI-frame in a paging cycle; and reference may be made to a parameter nAndPEI-FrameOffset in the RRC parameter information below;

an offset of a PEI-frame; and reference may be made to nAndPEI-FrameOffset in the RRC parameter information below;

a first offset; and reference may be made to a parameter firstPDCCH-MonitoringOccasionOfPEI-O in the RRC parameter information below; and

10

a first offset list, where a value range of the first offset list is (1, max PEI-O-perPEI-frame or perT), and max PEI-O-perPEI-frame or perT means a maximum quantity of PEI-Os included in one PEI-frame or one paging cycle; and for details, reference may be made to a parameter firstPDCCH-MonitoringOccasionOfPEI-O in the RRC parameter information below.

RRC parameter information:

(1) nAndPEI-FrameOffset (namely, the first density and the offset of the PEI-frame)

CHOICE {

| | |
|---|---|
| oneT | NULL, |
| halfT | INTEGER (0..1), |
| quarterT | INTEGER (0..3), |
| oneEighthT | INTEGER (0..7), |
| oneSixteenthT | INTEGER (0..15) |
| onethirtysecondT | INTEGER (0..31) |

               One(2^n)T                INTEGER (0..2^n-1)

          },

          (2) firstPDCCH-MonitoringOccasionOfPEI-O    CHOICE {

               SCS15KHZoneT     SEQUENCE (SIZE (1..maxPEI-O-perPEI-frame or perT)) OF INTEGER (0..139),

               SCS30KHZoneT-SCS15KHZhalfT    SEQUENCE (SIZE (1..maxPEI-O-perPEI-frame or perT)) OF INTEGER (0..279),

               SCS60KHZoneT-SCS30KHZhalfT-SCS15KHZquarterT    SEQUENCE (SIZE (1..maxPEI-O-perPEI-frame or perT)) OF INTEGER (0..559),

               SCS120KHZoneT-SCS60KHZhalfT-SCS30KHZquarterT-SCS15KHZoneEighthT    SEQUENCE (SIZE (1..maxPEI-O-perPEI-frame or perT)) OF INTEGER (0..1119),

               SCS120KHZhalfT-SCS60KHZquarterT-SCS30KHZoneEighthT-SCS15KHZoneSixteenthT    SEQUENCE (SIZE (1..maxPEI-O-perPEI-frame or perT)) OF INTEGER (0..2239),

               SCS120KHZquarterT-SCS60KHZoneEighthT-SCS30KHZoneSixteenthT-SCS15KHZonethirtysecondT    SEQUENCE (SIZE (1..maxPEI-O-perPEI-frame or perT)) OF INTEGER (0..4479),

               SCS120KHZoneEighthT-SCS60KHZoneSixteenthT-SCS30KHZonethirtysecondT    SEQUENCE (SIZE (1..maxPEI-O-perPEI-frame or perT)) OF INTEGER (0..8959),

               SCS120KHZoneSixteenthT-           SCS60KHZonethirtysecondT   SEQUENCE (SIZE (1..maxPEI-O-perPEI-frame or perT)) OF INTEGER (0..17919)

               SCS120KHZonethirtysecondT     SEQUENCE (SIZE (1..maxPO-perPF)) OF INTEGER (0..17919)

          … }.

According to the foregoing various implementation, flexibility of network configuration of the first offset is increased, and detection performance of the terminal on the PEI-O is improved by avoiding a collision between the PEI-O and another channel signal or a collision among a plurality of PEI-Os associated with different PEI-frames.

The information obtaining method provided in the embodiments of this application may be executed by an information obtaining apparatus. In the embodiments of this application, that the information obtaining apparatus performs the information obtaining method is used as an example to describe the information obtaining apparatus provided in the embodiments of this application.

As shown in FIG. 5, an embodiment of this application further provides an information obtaining apparatus 500, including:

      a first obtaining module 501, configured to obtain a first offset, where the first offset indicates an offset between a radio frame associated with a paging early indication occasion PEI-O and the 1st paging early indication monitoring occasion PEI-MO of the PEI-O; and

a monitoring module 502, configured to monitor the PEI-O based on the first offset, where

a value range of the first offset is related to at least one of the following items:

a subcarrier spacing SCS;

a length of the radio frame;

a first density, where the first density is a density of a PEI-O or a paging early indication frame PEI-frame in a first time span; and

a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

Optionally, in a case that the value range of the first offset is related to the first density and the SCS, the first offset meets the following condition:

offset $\leq$ a quantity of first symbols, where

offset represents a value of the first offset, and the quantity of first symbols is obtained through calculation based on the first density and the SCS.

Optionally, the first density is related to at least one of the following items:

a second density;

a quantity of POs associated with the PEI-O; and

a quantity of PFs occupied by the POs associated with the PEI-O, where

the second density is a density of a PF in a second time span.

Optionally, in a case that the first density is related to the second density and the quantity of PFs occupied by the POs associated with the PEI-O, the first density meets the following condition:

the first density = the second density $\div$ the quantity of PFs occupied by the POs associated with the PEI-O.

Optionally, the first density is equal to the second density.

Optionally, in a case that the value range of the first offset is related to the value of the second offset and the SCS, the first offset meets the following condition:

offset $\leq$ a quantity of second symbols, where

offset represents a value of the first offset, and the quantity of second symbols is obtained through calculation based on the value of the second offset and the SCS.

Optionally, in a case that the value range of the first offset is related to a length of one radio frame and the SCS, the first offset meets the following condition:

offset $\leq$ a quantity of third symbols, where

offset represents a value of the first offset, and the quantity of third symbols is obtained through calculation based on the length of the radio frame and the SCS.

The apparatus in this embodiment of this application obtains a first offset. The first offset indicates an offset between a radio frame associated with a paging early indication occasion PEI-O and the 1st PEI-MO of the PEI-O. A value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between the radio frame associated with the PEI-O and a target paging frame PF, and the target paging frame is an earliest or latest PF in at least one PF in which a paging occasion PO associated with the PEI-O is located. The first density, the second offset, and the SCS are configurable parameters and value ranges are flexible. Therefore, the value range of the first offset is determined based on the first density, the second offset, and/or the SCS, so that a value of the first offset is more adaptive and flexible, and detection performance of the terminal on the PEI-O can be improved.

The information obtaining apparatus in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but be not limited to the foregoing listed types of the terminal 11. Another device may be a server, a network attached storage (Network Attached Storage, NAS), or the like. This is not specifically limited in this embodiment of this application.

The information obtaining apparatus provided in this embodiment of this application can implement the processes implemented in the method embodiment in FIG. 3, and achieve a same technical effect. To avoid repetition, details are not described herein again.

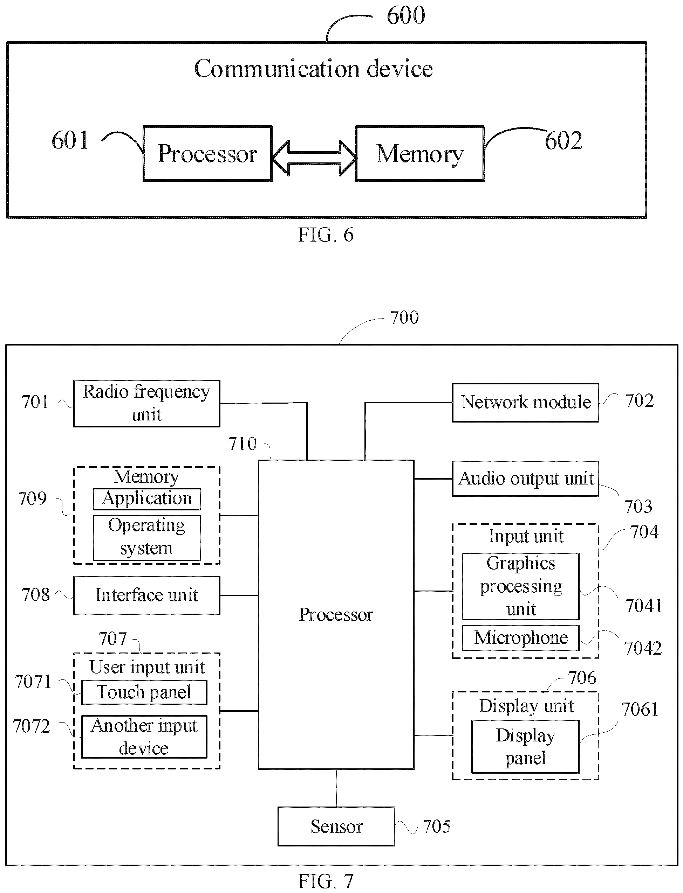

Optionally, as shown in FIG. 6, an embodiment of this application further provides a communication device 600, including a processor 601 and a memory 602. The memory 602 stores a program or an instruction that can be run on the processor 601. For example, when the communication device 600 is a terminal, and the program or the instruction is executed by the processor 601, the steps of the foregoing embodiment of the information obtaining method are implemented, and a same technical effect can be achieved. When the communication device 600 is a network side device, and the program or the instruction is executed by the processor 601, the steps of the foregoing embodiment of the information configuration method are implemented, and a same technical effect can be achieved. To avoid repetition, details are not repeated herein.

An embodiment of this application further provides a terminal, including a processor and a communication interface, where the communication interface is configured to obtain a first offset, where the first offset indicates an offset between a radio frame associated with a paging early indication occasion PEI-O and the $1^{st}$ paging early indication monitoring occasion PEI-MO of the PEI-O; and the processor is configured to monitor the PEI-O based on the first offset, where

a value range of the first offset (first PDCCH-Monitoring Occasion Of PEI-O) is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located. The terminal embodiment corresponds to the foregoing method embodiment of the terminal side. Each implementation process and implementation of the foregoing method embodiment may be applicable to the terminal embodiment, and a same technical effect can be achieved. Specifically, FIG. 7 is a schematic diagram of a hardware structure of a terminal according to an embodiment of this application.

The terminal 700 includes but is not limited to at least a part of components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (such as a battery) that supplies power to each component. The power supply may be logically connected to the processor 710 by using a power supply management system, to implement functions such as charging and discharging management, and power consumption management by using the power supply management system. The terminal structure shown in FIG. 7 constitutes no limitation on the terminal, and the terminal may include more or fewer components than those shown in the figure, or combine some components, or have different component arrangements. Details are not described herein.

It should be understood that, in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but be not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 701 may transmit the downlink data to the processor 710 for processing. In addition, the radio frequency unit 701 may send uplink data to the network side device. Usually, the radio frequency unit 701 includes but is not limited to an antenna, an amplifier, a transceiver, a coupler, a low noise amplifier, a duplexer, and the like.

The memory 709 may be configured to store a software program or an instruction and various data. The memory 709 may mainly include a first storage area for storing a program or an instruction and a second storage area for storing data. The first storage area may store an operating system, and an application or an instruction required by at least one function (for example, a sound playing function or an image playing function). In addition, the memory 709 may be a volatile memory or a non-volatile memory, or the memory 709 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 709 in this embodiment of this application includes but is not limited to these memories and any memory of another proper type.

The processor 710 may include one or more processing units. Optionally, an application processor and a modem processor may be integrated into the processor 710. The application processor mainly processes an operating system, a user interface, an application, and the like. The modem processor mainly processes a wireless communication signal, for example, a baseband processor. It may be understood that, alternatively, the modem processor may not be integrated into the processor 710.

The radio frequency unit 701 is configured to obtain a first offset, where the first offset indicates an offset between a radio frame associated with a paging early indication occasion PEI-O and the 1st paging early indication monitoring occasion PEI-MO of the PEI-O.

The processor 710 is configured to monitor the PEI-O based on the first offset.

A value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

In this embodiment of this application, a first offset is obtained. The first offset indicates an offset between a radio frame associated with a paging early indication occasion PEI-O and the 1st PEI-MO of the PEI-O. A value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between the radio frame associated with the PEI-O and a target paging frame PF, and the target paging frame is an earliest or latest PF in at least one PF in which a paging occasion PO associated with the PEI-O is located. The first density, the second offset, and the SCS are configurable parameters and value ranges are flexible. Therefore, the value range of the first offset is determined based on the first density, the second offset, and/or the SCS, so that a value of the first offset is more adaptive and flexible, and detection performance of the terminal on the PEI-O can be improved.

Optionally, in a case that the value range of the first offset is related to the first density and the SCS, the first offset meets the following condition:

offset ≤ a quantity of first symbols, where
offset represents a value of the first offset, and the quantity of first symbols is obtained through calculation based on the first density and the SCS.

Optionally, the first density is related to at least one of the following items:

a second density;
a quantity of POs associated with the PEI-O; and
a quantity of PFs occupied by the POs associated with the PEI-O, where
the second density is a density of a PF in a second time span.

Optionally, in a case that the first density is related to the second density and the quantity of PFs occupied by the POs associated with the PEI-O, the first density meets the following condition:

the first density = the second density ÷ the quantity of PFs occupied by the POs associated with the PEI-O.

Optionally, the first density is equal to the second density.

Optionally, in a case that the value range of the first offset is related to the value of the second offset and the SCS, the first offset meets the following condition:

offset ≤ a quantity of second symbols, where
offset represents a value of the first offset, and the quantity of second symbols is obtained through calculation based on the value of the second offset and the SCS.

Optionally, in a case that the value range of the first offset is related to a length of one radio frame and the SCS, the first offset meets the following condition:

offset ≤ a quantity of third symbols, where
offset represents a value of the first offset, and the quantity of third symbols is obtained through calculation based on the length of the radio frame and the SCS.

In this embodiment of this application, a first offset is obtained. The first offset indicates an offset between a radio frame associated with a paging early indication occasion PEI-O and the 1st PEI-MO of the PEI-O. A value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between the radio frame associated with the PEI-O and a target paging frame PF, and the target paging frame is an earliest or latest PF in at least one PF in which a paging occasion PO associated with the PEI-O is located. The first density, the second offset, and the SCS are configurable parameters and value ranges are flexible. Therefore, the value range of the first offset is determined based on the first density, the second offset, and/or the SCS, so that a value of the first offset is more adaptive and flexible, and detection performance of the terminal on the PEI-O can be improved.

The information configuration method provided in the embodiments of this application may be executed by an information configuration apparatus. In the embodiments of this application, that the information configuration apparatus performs the information configuration method is used as an example to describe the information configuration apparatus provided in the embodiments of this application.

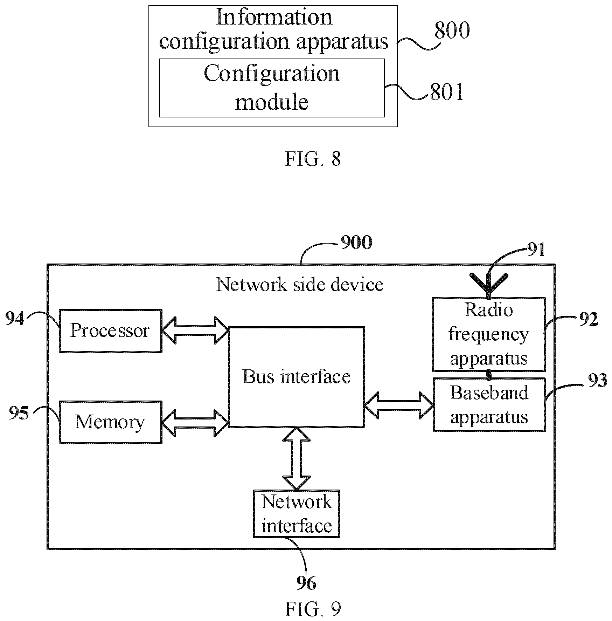

As shown in FIG. 8, an embodiment of this application further provides an information configuration apparatus 800, including:

a configuration module 801, used to configure a first offset, where the first offset indicates an offset between a radio frame associated with a paging early indication occasion PEI-O and the 1st paging early indication monitoring occasion PEI-MO of the PEI-O, where
a value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located.

Optionally, the apparatus in this embodiment of this application further includes:
a sending module, configured to send the first offset.

Optionally, in a case that the value range of the first offset is related to the first density and the SCS, the first offset meets the following condition:

offset ≤ a quantity of first symbols, where
offset represents a value of the first offset, and the quantity of first symbols is obtained through calculation based on the first density and the SCS.

Optionally, for the apparatus in this embodiment of this application, the quantity of first symbols is obtained based on an interval between two adjacent PEI-frames and the SCS. The interval between the two adjacent PEI-frames is obtained based on the first density.

Optionally, the first density is related to at least one of the following items:

a second density;
a quantity of POs associated with the PEI-O; and
a quantity of PFs occupied by the POs associated with the PEI-O, where
the second density is a density of a PF in a second time span.

Optionally, in a case that the first density is related to the second density and the quantity of PFs occupied by the POs associated with the PEI-O, the first density meets the following condition:

the first density = the second density ÷ the quantity of PFs occupied by the POs associated with the PEI-O.

Optionally, the first density is equal to the second density.

Optionally, in a case that the value range of the first offset is related to the value of the second offset and the SCS, the first offset meets the following condition:

offset ≤ a quantity of second symbols, where
offset represents a value of the first offset, and the quantity of second symbols is obtained through calculation based on the value of the second offset and the SCS.

Optionally, in a case that the value range of the first offset is related to a length of one radio frame and the SCS, the first offset meets the following condition:

offset ≤ a quantity of third symbols, where
offset represents a value of the first offset, and the quantity of third symbols is obtained through calculation based on the length of the radio frame and the SCS.

Optionally, the configuration module is used to configure a first offset list. The first offset list includes at least one first offset, and a quantity of first offsets included in the first offset list is determined based on a maximum quantity of PEI-Os included in a paging cycle or a PEI-frame.

Optionally, each first offset in the first offset list corresponds to one PEI-O.

In this embodiment of this application, a network side device configures the first offset, and sends the first offset to a terminal. A value range of the first offset is related to at least one of the following items: a subcarrier spacing SCS; a length of the radio frame; a first density, where the first density is a density of a PEI-O or a PEI-frame in a first time span; and a value of a second offset, where the second offset indicates an offset between a start moment of the radio frame associated with the PEI-O and a start moment of a target paging frame PF, and the target paging frame is an earliest or latest PF in at least one PF in which a paging occasion PO associated with the PEI-O is located. The first density, the second offset, and the SCS are configurable parameters and value ranges are flexible. Therefore, the value range of the first offset is determined based on the first density, the second offset, and/or the SCS, so that a value of the first offset is more adaptive and flexible, and detection performance of the terminal on the PEI-O can be improved.

An embodiment of this application further provides a network side device, including a processor and a communication interface, where the processor is used to configure a first offset, where the first offset indicates an offset between a radio frame associated with a paging early indication occasion PEI-O and the 1st paging early indication monitoring occasion PEI-MO of the PEI-O, where
a value range of the first offset is related to at least one of the following items:

a subcarrier spacing SCS;
a length of the radio frame;
a first density, where the first density is a density of a PEI-O or a paging early indication frame PEI-frame in a first time span; and
a value of a second offset, where the second offset indicates an offset between the radio frame associated with the PEI-O and a target paging frame PF, and the target paging frame is an earliest or latest PF in at least one PF in which a paging occasion PO associated with the PEI-O is located. The network side device embodiment corresponds to the foregoing method embodiment of the network side device. Each implementation process and implementation of the foregoing method embodiment may be applicable to the network side device embodiment, and a same technical effect can be achieved.

Specifically, an embodiment of this application further provides a network side device. As shown in FIG. 9, the network side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes information that needs to be sent, and sends processed information to the radio frequency apparatus 92. The radio frequency apparatus 92 processes the received information, and sends processed information by using the antenna 91.

In the foregoing embodiment, the method performed by the network side device may be implemented in a baseband apparatus 93. The baseband apparatus 93 includes a baseband processor.

The baseband apparatus 93 may include, for example, at least one baseband board. A plurality of chips are disposed on the baseband board. As shown in FIG. 9, one chip is, for example, a baseband processor, and is connected to the memory 95 by using a bus interface, to invoke a program in the memory 95 to perform the operations of the network side device shown in the foregoing method embodiment.

The network side device may further include a network interface 96, and the interface is, for example, a common public radio interface (common public radio interface, CPRI).

Specifically, the network side device 900 in this embodiment of this application further includes an instruction or a program that is stored in the memory 95 and that can be run on the processor 94. The processor 94 invokes the instruction or the program in the memory 95 to perform the method performed by the modules shown in FIG. 8, and a same technical effect is achieved. To avoid repetition, details are not described herein again.

An embodiment of this application further provides a readable storage medium. The readable storage medium stores a program or an instruction. When the program or the instruction is executed by a processor, the processes of the foregoing embodiment of the information obtaining method or the information configuration method are implemented, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing embodiment of the information obtaining method or the information configuration method, and a same technical effect can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium, and the computer program/program product is executed by at least one processor to implement the processes of the foregoing embodiment of the information obtaining method or the information configuration method, and a same technical effect can be achieved. To avoid repetition, details are not described herein again.

An embodiment of this application further provides an information processing system, including a terminal and a network side device. The terminal may be configured to perform the steps of the information obtaining method, and the network side device may be configured to perform the steps of the information configuration method.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in a reverse order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the methods in the foregoing embodiments may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

**Claims**

1. An information obtaining method, comprising:

   obtaining, by a terminal, a first offset, wherein the first offset indicates an offset between a radio frame associated with a paging early indication occasion PEI-O and the 1st paging early indication monitoring occasion PEI-MO of the PEI-O; and
   monitoring, by the terminal, the PEI-O based on the first offset, wherein
   a value range of the first offset is related to at least one of the following items:

   a subcarrier spacing SCS;
   a length of a radio frame;
   a first density, wherein the first density is a density of a PEI-O or a paging early indication frame PEI-frame in a first time span; and
   a value of a second offset, wherein the second offset indicates an offset between the radio frame associated with the PEI-O and a target paging frame PF, and the target paging frame is an earliest or latest PF in at least one PF in which a paging occasion PO associated with the PEI-O is located.

2. The method according to claim 1, in a case that the value range of the first offset is related to the first density and the SCS, the first offset meets the following condition:

   offset ≤ a quantity of first symbols, wherein
   offset represents a value of the first offset, and the quantity of first symbols is obtained through calculation based on the first density and the SCS.

3. The method according to claim 1 or 2, wherein the first density is related to at least one of the following items:

   a second density;
   a quantity of POs associated with the PEI-O; and
   a quantity of PFs occupied by the POs associated with the PEI-O, wherein
   the second density is a density of a PF in a second time span.

4. The method according to claim 3, in a case that the first density is related to the second density and the quantity of PFs occupied by the POs associated with the PEI-O, the first density meets the following condition:

   the first density = the second density ÷ the quantity of PFs occupied by the POs associated with the PEI-O.

5. The method according to claim 3, wherein the first density is equal to the second density.

6. The method according to claim 1, in a case that the value range of the first offset is related to the value of the second offset and the SCS, the first offset meets the following condition:

   offset ≤ a quantity of second symbols, wherein
   offset represents a value of the first offset, and the quantity of second symbols is obtained through calculation based on the value of the second offset and the SCS.

7. The method according to claim 1, in a case that the value range of the first offset is related to a length of one radio frame and the SCS, the first offset meets the following condition:

offset ≤ a quantity of third symbols, wherein
offset represents a value of the first offset, and the quantity of third symbols is obtained through calculation based on the length of the radio frame and the SCS.

8. An information configuration method, comprising:

configuring, by a network side device, a first offset, wherein the first offset indicates an offset between a radio frame associated with a paging early indication occasion PEI-O and the 1st paging early indication monitoring occasion PEI-MO of the PEI-O, wherein
a value range of the first offset is related to at least one of the following items:

a subcarrier spacing SCS;
a length of the radio frame;
a first density, wherein the first density is a density of a PEI-O or a paging early indication frame PEI-frame in a first time span; and
a value of a second offset, wherein the second offset indicates an offset between the radio frame associated with the PEI-O and a target paging frame PF, and the target paging frame is an earliest or latest PF in at least one PF in which a paging occasion PO associated with the PEI-O is located.

9. The method according to claim 8, in a case that the value range of the first offset is related to the first density and the SCS, the first offset meets the following condition:

offset ≤ a quantity of first symbols, wherein
offset represents a value of the first offset, and the quantity of first symbols is obtained through calculation based on the first density and the SCS.

10. The method according to claim 9, wherein the quantity of first symbols is obtained based on an interval between two adjacent PEI-frames and the SCS, wherein the interval between the two adjacent PEI-frames is obtained based on the first density.

11. The method according to any one of claims 8 to 10, wherein the first density is related to at least one of the following items:

a second density;
a quantity of POs associated with the PEI-O; and
a quantity of PFs occupied by the POs associated with the PEI-O, wherein
the second density is a density of a PF in a second time span.

12. The method according to claim 11, in a case that the first density is related to the second density and the quantity of PFs occupied by the POs associated with the PEI-O, the first density meets the following condition:

the first density = the second density ÷ the quantity of PFs occupied by the POs associated with the PEI-O.

13. The method according to claim 11, wherein the first density is equal to the second density.

14. The method according to claim 8, in a case that the value range of the first offset is related to the value of the second offset and the SCS, the first offset meets the following condition:

offset ≤ a quantity of second symbols, wherein
offset represents a value of the first offset, and the quantity of second symbols is obtained through calculation based on the value of the second offset and the SCS.

15. The method according to claim 8, in a case that the value range of the first offset is related to a length of one radio frame and the SCS, the first offset meets the following condition:

offset ≤ a quantity of third symbols, wherein
offset represents a value of the first offset, and the quantity of third symbols is obtained through calculation based on the length of the radio frame and the SCS.

16. The method according to claim 8, wherein the configuring, by a network side device, a first offset comprises: configuring, by the network side device, a first offset list, wherein the first offset list comprises at least one first offset, and a quantity of first offsets comprised in the first offset list is determined based on a maximum quantity of PEI-Os comprised in a paging cycle or a PEI-frame.

17. The method according to claim 16, wherein each first offset in the first offset list corresponds to one PEI-O.

18. An information obtaining apparatus, comprising:

a first obtaining module, configured to obtain a first offset, wherein the first offset indicates an offset between a radio frame associated with a paging early indication occasion PEI-O and the 1st paging early indication monitoring occasion PEI-MO of the PEI-O; and
a monitoring module, configured to monitor the PEI-O based on the first offset, wherein
a value range of the first offset is related to at least one of the following items:

a subcarrier spacing SCS;
a length of the radio frame;
a first density, wherein the first density is a density of a PEI-O or a paging early indication frame PEI-frame in a first time span; and
a value of a second offset, wherein the second offset indicates an offset between the radio frame associated with the PEI-O and a target paging frame PF, and the target paging frame is an earliest or latest PF in at least one PF in which a paging occasion PO associated with the PEI-O is located.

19. An information configuration apparatus, comprising:

a configuration module, used to configure a first offset, wherein the first offset indicates an offset between a radio frame associated with a paging early indication occasion PEI-O and the 1st paging early indication monitoring occasion PEI-MO of the PEI-O, wherein
a value range of the first offset is related to at least one of the following items:

a subcarrier spacing SCS;
a length of the radio frame;
a first density, wherein the first density is a density of a PEI-O or a paging early indication frame PEI-frame in a first time span; and
a value of a second offset, wherein the second offset indicates an offset between the radio frame associated with the PEI-O and a target paging frame PF, and the target paging frame is an earliest or latest PF in at least one PF in which a paging occasion PO associated with the PEI-O is located.

20. A terminal, comprising a processor and a memory, wherein the memory stores a program or an instruction that can be run on the processor, and when the program or the instruction is executed by the processor, the steps of the information obtaining method according to any one of claims 1 to 7 are implemented.

21. A network side device, comprising a processor and a memory, wherein the memory stores a program or an instruction that can be run on the processor, and when the program or the instruction is executed by the processor, the steps of the information configuration method according to any one of claims 8 to 17 are implemented.

22. A readable storage medium, wherein the readable storage medium stores a program or an instruction, and when the program or the instruction is executed by a processor, the steps of the information obtaining method according to any one of claims 1 to 7 are implemented, or the steps of the information configuration method according to any one of claims 8 to 17 are implemented.

Network side
device

11

11

Terminal

Terminal

FIG. 1

Paging early indication frame (PEI-frame)

PF

| SSB | PEI MO | ··· | PEI MO | PEI MO | ··· | PEI MO | SSB | ··· | SSB | PO1 | PO2 | PO3 | PO4 |

Parameter 2

PEI-O1

PEI-O2

Parameter 2

Parameter 1

FIG. 2

Start

A terminal obtains a first offset, where the first offset indicates an offset between a radio frame associated with a paging early indication occasion PEI-O and the 1st paging early indication monitoring occasion PEI-MO of the PEI-O — 301

The terminal monitors the PEI-O based on the first offset — 302

End

FIG. 3

Start

A network side device configures a first offset, where the first offset indicates an offset between a radio frame associated with a paging early indication occasion PEI-O and the 1st paging early indication monitoring occasion PEI-MO of the PEI-O — 401

End

FIG. 4

Information obtaining apparatus — 500

First obtaining module — 501

Monitoring module — 502

FIG. 5

600

## Communication device

601 Processor ⟷ Memory 602

FIG. 6

700

701 Radio frequency unit

Network module 702

710

709 Memory
Application
Operating system

Audio output unit

703

704

Input unit

Graphics processing unit 7041

Microphone 7042

708 Interface unit

707

User input unit
7071 Touch panel
7072 Another input device

Processor

706

Display unit 7061

Display panel

Sensor 705

FIG. 7

Information configuration apparatus ~800

Configuration module ~801

FIG. 8

900 ~91

Network side device

Processor 94

Bus interface

Radio frequency apparatus ~92

Memory 95

Baseband apparatus ~93

Network interface

96

FIG. 9

## INTERNATIONAL SEARCH REPORT

| International application No. |
|---|
| **PCT/CN2023/071301** |

**A. CLASSIFICATION OF SUBJECT MATTER**

H04W68/00(2009.01)i

According to International Patent Classification (IPC) or to both national classification and IPC

**B. FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE, 3GPP: 寻呼提前指示, 寻呼预告指示, 寻呼早期指示, 时机, 偏移, 监听, 取值, 范围, 子载波间隔, 帧, 长度, 密度, 寻呼, PEI, PO, occasion, offset, monitor, value, range, scope, SCS, frame, length, density, paging

**C. DOCUMENTS CONSIDERED TO BE RELEVANT**

| Category* | Citation of document, with indication, where appropriate, of the relevant passages | Relevant to claim No. |
|---|---|---|
| A | CN 110446258 A (TELECOMMUNICATIONS TECHNOLOGY RESEARCH INSTITUTE CO., LTD.) 12 November 2019 (2019-11-12)<br>entire document | 1-22 |
| A | CN 110474708 A (VIVO COMMUNICATION TECHNOLOGY CO., LTD.) 19 November 2019 (2019-11-19)<br>entire document | 1-22 |
| A | WO 2021235860 A1 (SAMSUNG ELECTRONICS CO., LTD.) 25 November 2021 (2021-11-25)<br>entire document | 1-22 |
| A | TRANSSION HOLDINGS. "Discussion on PEI Design"<br>*3GPP TSG RAN WG1 #107-e R1-2111674,* 19 November 2021 (2021-11-19),<br>section 2.3 | 1-22 |
| A | XIAOMI COMMUNICATIONS. "Remaining issues on PEI monitoring"<br>*3GPP TSG-RAN WG2 Meeting #116e R2-2111135,* 22 November 2021 (2021-11-22),<br>entire document | 1-22 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 February 2023** | **22 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2023/071301** |

**C.    DOCUMENTS CONSIDERED TO BE RELEVANT**

| Category* | Citation of document, with indication, where appropriate, of the relevant passages | Relevant to claim No. |
| --- | --- | --- |
| A | HUAWEI et al. "Paging enhancements for UE power saving in IDLE/inactive mode" *3GPP TSG RAN WG1 Meeting #106bis R1-2108744,* 19 October 2021 (2021-10-19), entire document | 1-22 |

Form PCT/ISA/210 (second sheet) (July 2022)

## INTERNATIONAL SEARCH REPORT
### Information on patent family members

International application No.

**PCT/CN2023/071301**

| Patent document cited in search report | | | Publication date (day/month/year) | Patent family member(s) | | | Publication date (day/month/year) |
|---|---|---|---|---|---|---|---|
| CN | 110446258 | A | 12 November 2019 | None | | | |
| CN | 110474708 | A | 19 November 2019 | None | | | |
| WO | 2021235860 | A1 | 25 November 2021 | KR | 20220134592 | A | 05 October 2022 |
| | | | | EP | 4111750 | A1 | 04 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210028318